# EUROPÄISCHE PATENTSCHRIFT

(11) **EP 3 512 325 B1**
(45) Veröffentlichungstag und Bekanntmachung des Hinweises auf die Patenterteilung: **27.03.2024**
(21) Anmeldenummer: 17772330.1
(22) Anmeldetag: 11.09.2017
(51) Int. Cl.: A01M 7/00, G06Q 50/02, A01B 79/00

(54) **EFFIZIENTER EINSATZ VON PFLANZENSCHUTZMITTELN, NÄHRSTOFFEN UND DERGLEICHEN BEIM ANBAU VON KULTURPFLANZEN**
EFFICIENT USE OF PLANT PROTECTION PRODUCTS, FEED AND THE LIKE WHEN CULTIVATING CROPS
UTILISATION EFFICACE DE PRODUITS PHYTOSANITAIRES, NUTRIMENTS ET SIMILAIRES DANS LA CULTURE DE PLANTES

(30) Priorität: 16.09.2016 EP 16189255
(43) Veröffentlichungstag der Anmeldung: 24.07.2019
(73) Patentinhaber: BASF Agro Trademarks GmbH, 67056 Ludwigshafen am Rhein (DE)
(72) Erfinder: PETERS, Ole, 40217 Düsseldorf (DE); MENNE, Tobias, 50677 Köln (DE); MELNITCHOUCK, Alexei, Calgary T2Y 4N4 (CA)
(74) Vertreter: BASF IP Association
(86) Internationale Anmeldenummer: PCT/EP2017/072739
(87) Internationale Veröffentlichungsnummer: WO 2018/050592

(56) Entgegenhaltungen:
- WO-A1-00/23937
- WO-A1-2016/090212
- US-A- 5 915 313
- US-A1- 2006 282 228
- US-A1- 2009 132 132
- US-A1- 2014 012 732
- US-A1- 2016 171 680
- US-B1- 6 199 000
- Martin Scheiber ET AL: "Vereinfachung des Pflanzenschutzprozesses durch Datenintegration und Automation - Das Projekt PAM", 35. GIL-Jahrestagung 2015, 23.-24. Februar 2015, 23. Februar 2015 (2015-02-23), XP055337027, Gefunden im Internet: URL:http://www.gil-net.de/Publikationen/27 _161.pdf [gefunden am 2017-01-19] in der Anmeldung erwähnt
- Christoph Federle ET AL: "Ref: C0209 PESTICIDE APPLICATION MANAGER (PAM) -DECISION SUPPORT IN CROP PROTECTION BASED ON TERRAIN-, MACHINE-, BUSINESS-AND PUBLIC DATA", Proceedings International Conference of Agricultural Engineering, 6. Juli 2014 (2014-07-06), XP055336974, Zurich, Gefunden im Internet: URL:http://www.geyseco.es/geystiona/adjs/c omunicaciones/304/C02090001.pdf [gefunden am 2017-01-19]
- Anonymous: "Das verrät der Wetterbericht nicht: 12 Tipps für den Pflanzenschutz | agrarheute.com", , 22 April 2016 (2016-04-22), pages 1-7, XP055977996, Retrieved from the Internet: URL:https://www.agrarheute.com/technik/ack erbautechnik/verraet-wetterbericht-12-tipp s-fuer-pflanzenschutz-520987 [retrieved on 2022-11-04]
- CRAIGIE ROB ET AL: "Crop sensing for nitrogen management", FAR FOCUS, no. 9, 9 April 2013 (2013-04-09), pages 1-32, XP093039044, ISSN: 1175-5504 ISBN: 978-0-9876673-4-2 Retrieved from the Internet: URL:https://www.far.org.nz/assets/files/up loads/28161_FAR_focus_9_-_crop_sensing_web .pdf> [retrieved on 2023-04-13]

## Beschreibung

Die vorliegende Erfindung beschäftigt sich mit dem effizienten Einsatz von Applikationsmitteln beim Anbau von Kulturpflanzen.

Unter den Bezeichnungen "Präzisionslandwirtschaft" und "teilschlagebezogene Landwirtschaft" (engl. precision farming) werden Landbewirtschaftungsmaßnahmen zusammengefasst, die an die Variabilität der Standort- und Bestandsparameter angepasst sind.

Die zunehmende Verfügbarkeit von Positionierungssystemen wie GPS (Global Positioning System) und raumbezogenen Erfassungs- und Auswertesystemen wie GIS (Geografisches Informationssystem) führte in den vergangenen Jahren zu einer zunehmenden Verbreitung derartiger Maßnahmen.

Mit Hilfe von Fernerkundungssystemen ist es möglich, Unterschiede in einem landwirtschaftlich genutzten Feld zu erkennen und diese Unterschiede in Zonenkarten darzustellen. Eine solche Zonenkarte kann Aufschluss darüber geben, wie variabel ein Feld hinsichtlich seiner Ertragsfähigkeit sein kann. Areale mit ähnlichem Potenzial werden in einer Zone zusammengefasst. Die Intensität der Bearbeitung wird dann den Zonen entsprechend variiert.

Umweltauflagen und steigende Preise für Betriebsmittel verlangen nach einem effizienten und zielgerichteten Ressourceneinsatz. Durch die Verwendung von so genannten Applikationskarten auf Basis der Zonen wird der Einsatz von Saatgut, Dünger und Pflanzenschutzmitteln teilflächenspezifisch optimiert.

Die Erstellung und Verwendung solcher Applikationskarten ist beispielsweise in den Offenlegungen US5915313 und US2006282228A beschrieben.

Applikationskarten werden auf Basis des teilflächenspezifisch ermittelten Bedarfs erstellt. Bei der Erstellung der Applikationskarten bleiben applikationsmittelspezifische Informationen in der Regel unberücksichtigt.

Pflanzenschutzmittel können in einigen Ländern Anwendungseinschränkungen unterliegen, zum Beispiel dürfen einige Pflanzenschutzmittel nur zu bestimmten Zeiten, an bestimmten Orten, zu einem bestimmten Zweck und/oder in einer bestimmten Menge eingesetzt werden.

Es wäre vorteilhaft, wenn derartige Information bei der Erstellung von Applikationskarten berücksichtigt werden würden.

In einer Applikationskarte sollten die Mengen an Applikationsmittel teilflächenspezifisch vermerkt sein. In der Regel wird es eine Teilfläche geben, die einen höheren Bedarf an Applikationsmittel hat als eine andere. Ein solcher Mehraufwand kann durch eine höhere Konzentration des Wirkstoffes an der Düse (mg/L) bei gleicher Ausbringung als auch durch eine höhere Ausbringung (L) bei gleicher Konzentration des Wirkstoffes erreicht werden. Für einige Applikationsmittel macht es jedoch einen Unterschied, ob die Konzentration oder die Ausbringung erhöht wird. Z.B. kann der Wirkmechanismus eines Pflanzenschutzmittels eine minimale und/oder maximale Konzentration erfordern. Es ist möglich, dass bei Unterschreitung einer Minimalkonzentration der Wirkstoff in dem Pflanzenschutzmittel keine Wirkung entfaltet; ebenso ist es möglich, dass der Wirkstoff bei Überschreiten einer Maximalkonzentration zu unerwünschten oder vermehrten Nebeneffekten führt.

Es wäre daher vorteilhaft, wenn derartige Information bei der Erstellung einer Applikationskarte Berücksichtigung fänden.

Das Wetter kann für die Applikation ebenfalls eine wichtige Rolle spielen. Applikationsmittel können beispielsweise bei direkter Sonneneinstrahlung schneller abgebaut werden oder eine veränderte Wirkung entfachen, zum Beispiel können unerwünschte Nebenwirkungen auftreten. Dementsprechend müsste die Menge und/oder Konzentration eines Applikationsmittels an das bei der Applikation herrschende Wetter angepasst werden.

Es wäre vorteilhaft, wenn Wetter-Information bei der Erstellung der Applikationskarte Berücksichtigung fänden.

Die Publikation von Martin Schreiber et al. mit dem Titel "Vereinfachung des Pflanzenschutzprozesses durch Datenintegration und Automation - Das Projekt PAM", die im Rahmen der 35. GIL-Jahrestagung 2015 (23.-24. Februar 2015) der Öffentlichkeit zugänglich gemacht worden ist (http://www.gil-net.de/Publikationen/27161.pdf), offenbart die Planung und Ausführung von Pflanzenschutzapplikationen durch Zusammenführung und Integration einer Reihe von Daten aus verschiedenen Quellen. Die Planung umfasst auch das Aufrufen von herstellerspezifischen Anwendungshinweisen zum Pflanzenschutzmittel (siehe Punkt 2.5), allerdings fließen diese Informationen nicht in die Erstellung von Applikationskarten ein (siehe Abbildung 2).

Die Publikation US2014012732 A1 offenbart die Erstellung von Applikationskarten unter Berücksichtigung von Wetterinformationen, dem normalisierten Differenz-Vegetationsindex (NDVI) gewonnen aus Sensormessungen im Feld und der automatisierten Erkennung des verwendeten Applikationsmittels. Mittels der erstellten Applikationskarte und der gewonnenen Informationen werden daraufhin die Sprühdüsen einer Feldspritze dynamisch gesteuert und die Applikationsrate des zu versprühenden Fungizids oder Pestizids dynamisch angepasst.

Ausgehend vom beschriebenen Stand der Technik stellt sich damit die technische Aufgabe, die Effizienz beim Einsatz von Applikationsmittel weiter zu erhöhen.

Erfindungsgemäß wird diese Aufgabe durch die Gegenstände der unabhängigen Ansprüche 1, 2 und 7 gelöst. Bevorzugte Ausführungsformen finden sich in den abhängigen Ansprüchen und in der vorliegenden Beschreibung.

Ein erster Gegenstand der vorliegenden Erfindung ist damit ein Verfahren zur Erstellung einer Applikationskarte, umfassend die folgenden Schritte:
(A) Bereitstellen eines Applikationsmittels, das eine maschinenlesbare Kennung trägt,
(B) Einlesen der maschinenlesbaren Kennung in ein Computersystem durch einen Nutzer,
(C) Empfangen von Informationen über das Applikationsmittel aus einer Datenbank,
(D) Ermitteln eines teilflächenspezifischen Bedarfs an Applikationsmittel für ein Feld, auf dem Kulturpflanzen angebaut werden,
(E) Erstellen einer applikationsmittelspezifischen Applikationskarte auf Basis der Informationen über das Applikationsmittel aus der Datenbank und dem teilflächenspezifischen Bedarf.

Ein weiterer Gegenstand der vorliegenden Erfindung ist ein Verfahren zum Anbau von Kulturpflanzen in einem Feld, gekennzeichnet durch die folgenden Schritte:
(A) Bereitstellen eines Applikationsmittels, das eine maschinenlesbare Kennung trägt,
(B) Einlesen der maschinenlesbaren Kennung in ein Computersystem durch einen Nutzer,
(C) Empfangen von Informationen über das Applikationsmittel aus einer Datenbank,
(D) Ermitteln eines teilflächenspezifischen Bedarfs an Applikationsmittel für das Feld, auf dem die Kulturpflanzen angebaut werden,
(E) Erstellen einer applikationsmittelspezifischen Applikationskarte auf Basis der Informationen über das Applikationsmittel aus der Datenbank und dem teilflächenspezifischen Bedarf für das Feld, auf dem die Kulturpflanzen angebaut werden,
(F) teilflächenspezifisches Applizieren des Applikationsmittels gemäß der applikationsmittelspezifischen Applikationskarte.

Ein nicht beanspruchtes Beispiel ist ein Computerprogrammprodukt umfassend einen Datenträger, auf dem ein Computerprogramm gespeichert ist, das in einen Arbeitsspeicher eines Computersystems eingelesen werden kann und das Computersystem veranlasst, folgende Schritte vorzunehmen:
(a) Einlesen einer maschinenlesbaren Kennung von einem Applikationsmittel in den Arbeitsspeicher des Computersystems,
(b) Ermitteln von Informationen zu dem Applikationsmittel aus einer Datenbank und Einlesen der Informationen in den Arbeitsspeicher des Computersystems,
(c) Einlesen einer Zonenkarte für ein Feld, in dem Kulturpflanzen angebaut werden, in den Arbeitsspeicher des Computersystems, wobei in der Zonenkarte für einzelne Teilflächen des Felds ein Bedarf der Teilflächen an der Behandlung mit einem Applikationsmittel angegeben ist,
(d) Erstellen einer teilflächenspezifischen und applikationsmittelspezifischen Applikationskarte auf Basis der aus der Datenbank ermittelten Informationen zu dem Applikationsmittel und auf Basis des ermittelten teilflächenspezifischen Bedarfs,
(e) Ausgabe der erstellten Applikationskarte.

Ein weiterer Gegenstand der vorliegenden Erfindung ist ein System zur Erstellung applikationsmittelspezifischer Applikationskarten umfassend
I. ein Applikationsmittel, das eine maschinenlesbare Kennung trägt,
II. eine Leseeinheit zum Einlesen der maschinenlesbaren Kennung in ein Computersystem,
III. eine Datenbank, in der Informationen zum Applikationsmittel gespeichert sind,
IV. eine Zonenkarte für ein Feld, in dem Kulturpflanzen angebaut werden, wobei in der Zonenkarte für einzelne Teilflächen des Felds ein Bedarf der Teilflächen an der Behandlung mit einem Applikationsmittel angegeben ist,
V. ein Computersystem mit einem Arbeitsspeicher, in den ein Computerprogramm geladen werden kann, wobei das Computersystem so konfiguriert ist, dass es auf Basis der Zonenkarte und der Informationen zum Applikationsmittel eine applikationsmittelspezifische Applikationskarte erstellt, in der für einzelne Teilflächen angegeben ist, wie das Applikationsmittel appliziert werden sollte.

Ein weiterer Gegenstand der vorliegenden Erfindung ist eine applikationsmittelspezifische Applikationskarte, wobei die Applikationskarte eine digitale Repräsentation eines Feldes, auf dem Kulturpflanzen angebaut werden, ist, wobei in der Applikationskarte für einzelne Teilflächen der virtuellen Repräsentation des Feldes angegeben ist, wie ein Applikationsmittel appliziert werden sollte.

Ein weiterer Gegenstand der vorliegenden Erfindung ist die Verwendung des erfindungsgemäßen Systems, und/oder der erfindungsgenmäßen Applikationskarte zum effizienten Einsatz eines oder mehrerer Applikationsmittel beim Anbau von Kulturpflanzen.

Die Erfindung wird nachstehend näher erläutert, ohne zwischen den Erfindungsgegenständen (Verfahren, System, und nicht beanspruchten Beispielen von Computerprogrammprodukt, Applikationskarte, Verwendung) zu unterscheiden. Die nachfolgenden Erläuterungen sollen vielmehr für alle Erfindungsgegenstände und nicht beanspruchten Beispielen in analoger Weise gelten, unabhängig davon, in welchem Kontext (Verfahren, System, Computerprogrammprodukt, Applikationskarte, Verwendung) sie erfolgen.

Wenn nachfolgend von dem "erfindungsgemäßen Verfahren" die Rede ist, ist damit sowohl das Verfahren zur Erstellung einer Applikationskarte als auch das Verfahren zum Anbau von Kulturpflanzen gemeint.

Das erfindungsgemäße Verfahren umfasst einen ersten Schritt, bei dem ein Applikationsmittel bereitgestellt wird (Schritt (A)).

Unter einem Applikationsmittel wird allgemein ein Mittel verstanden, das beim Anbau von Kulturpflanzen eingesetzt wird, um einen Ernteertrag zu sichern und/oder zu erhöhen.

Beispiele für Applikationsmittel sind Dünger oder andere Nährstoffe und Pflanzenschutzmittel. Vorzugsweise ist das Applikationsmittel ein Pflanzenschutzmittel.

Unter einem Pflanzenschutzmittel wird ein Produkt verstanden, das einen Wirkstoff oder mehrere Wirkstoffe enthält.

Als "Wirkstoffe" werden Substanzen bezeichnet, die in einem Organismus eine spezifische Wirkung haben und eine spezifische Reaktion hervorrufen.

Das Pflanzenschutzmittel dient dazu, Pflanzen oder Pflanzenerzeugnisse vor Schadorganismen zu schützen oder deren Einwirkung vorzubeugen, unerwünschte Pflanzen oder Pflanzenteile zu vernichten, ein unerwünschtes Wachstum von Pflanzen zu hemmen oder einem solchen Wachstum vorzubeugen, und/oder in einer anderen Weise als Nährstoffe die Lebensvorgänge von Pflanzen zu beeinflussen (z.B. Wachstumsregler).

Bevorzugte Beispiele für Pflanzenschutzmittel sind Herbizide, Fungizide und Pestizide (z.B. Insektizide).

Unter dem Begriff "Kulturpflanze" wird eine Pflanze verstanden, die durch das Eingreifen der Menschen zielgerichtet als Nutz- oder Zierpflanze angebaut wird.

Unter dem Begriff "Feld" wird ein räumlich abgrenzbarer Bereich der Erdoberfläche verstanden, der landwirtschaftlich genutzt wird, indem auf einem solchen Feld Kulturpflanzen angepflanzt, mit Nährstoffen versorgt und geerntet werden.

Das Applikationsmittel kann fest, flüssig oder gasförmig sein. Ferner kann es sich dabei um einen Reinstoff oder um eine homogene oder heterogene Mischung handeln. Beispiele für heterogene Mischungen sind Emulsionen, Suspensionen oder Aerosole.

Üblicherweise ist das Applikationsmittel unter Normalbedingungen (Normaldruck und Normaltemperatur) flüssig. Üblicherweise handelt es sich bei dem Applikationsmittel um eine Wirkstoffformulierung, die neben dem Wirkstoff (oder mehreren Wirkstoffen) weitere Substanzen enthält, wie beispielsweise einen Trägerstoff (zur Verdünnung des Wirkstoffs), und ggf. Dispersionsmittel, um den Wirkstoff in dem Trägerstoff zu verteilen. Weitere Substanzen wie Puffer, Konservierungsmittel, Farbmittel, Antioxidantien u.a. sind als Bestandteile eines Applikationsmittels denkbar.

In der Regel wird das Applikationsmittel von einem Nutzer käuflich erworben.

Das Applikationsmittel trägt eine maschinenlesbare Kennung. "Maschinenlesbar" bedeutet, dass die Kennung in einem Format vorliegt, in der sie von einem Computersystem interpretiert werden kann.

Unter "Kennung" werden Daten verstanden, die mit dem Träger der Kennung in eindeutiger Weise verbunden sind. Aus der Kennung lässt sich damit auf den Träger der Kennung (im vorliegenden Fall auf das Applikationsmittel) schließen.

Dabei lassen sich prinzipiell zwei verschiedene Typen von Kennungen unterscheiden. Unter einer individuellen Kennung wird eine Kennung verstanden, die für den Träger einzigartig ist: jeder Träger trägt eine eindeutige Kennung, anhand der er sich von einem anderen Träger unterscheiden lässt. Unter einer typspezifischen Kennung wird eine Kennung verstanden, die für alle Träger gleichen Typs identisch ist, die sich aber von der Kennung eines anderen Typs unterscheidet. Anhand der Typ-Kennung lässt sich somit der Typ eines Applikationsmittels erkennen, nicht aber ein einzelnes Individuum. Anhand einer individuellen Kennung lässt sich ein einzelnes Individuum feststellen; anhand einer individuellen Kennung lässt sich aber selbstverständlich auch der Typ des vorliegenden Applikationsmittels feststellen.

Bei den maschinenlesbaren Kennungen der vorliegenden Erfindung handelt es sich um individuelle Kennungen.

Ein typisches und bevorzugtes Beispiel für ein Format, in dem die maschinenlesbaren Kennungen vorliegen können, ist ein optoelektronisch lesbarer Code wie beispielsweise ein Strichcode (z.B. Codabar, Code128 u.a.), ein 2D-Code (z.B. Codablock, Code 49 u.a.) oder ein Matrix-Code (z.B. DataMatrix, MaxiCode, Aztec-Code, QR-Code, u.a.).

Vorzugsweise liegt die maschinenlesbare Kennung als Matrix-Code vor.

Der Vorteil eines Matrix-Codes gegenüber einem Strichcode oder 2D-Code liegt in der größeren verfügbaren Datenmenge pro Flächeneinheit.

Zudem hat ein Matrix-Code den Vorteil, dass er mit den heute verfügbaren Smartphones ohne weitere Hardware gelesen werden kann. Solche Smartphones sind sehr weit verbreitet; sie verfügen über eine Kameraeinheit, mit der ein Matrixcode auf einem Bildsensor abgebildet werden kann und es lassen sich Programme auf dem Smartphone installieren, mit denen ein auf dem Bildsensor abgebildeter Matrixcode in einen Arbeitsspeicher des Smartphone eingelesen und dort interpretiert werden kann.

Es ist aber auch denkbar, dass die maschinenlesbare Kennung auf einem elektronischen Chip (ICC) gespeichert ist, von wo er kontaktlos oder kontaktbehaftet gelesen werden kann. Denkbar ist ein RFID-Tag oder ein NFC-Chip.

Die maschinenlesbare Kennung kann - je nach vorliegendem Format - auf unterschiedliche Weise mit dem Applikationsmittel verbunden sein. Handelt es sich beispielsweise um eine optoelektronisch lesbare Kennung, ist sie vorzugsweise auf einem Gebinde (Flasche, Container, Karton, etc.), in dem sich das Applikationsmittel befindet, aufgedruckt. Es ist auch denkbar, dass die Kennung auf einem Beipackzettel aufgedruckt ist.

Liegt die maschinenlesbare Kennung auf einem elektronischen Chip vor, kann der Chip dem Gebinde, in dem sich das Applikationsmittel befindet, anhaften.

In einer Ausführungsform der vorliegenden Erfindung ist die maschinenlesbare Kennung erst dann für einen Nutzer zugänglich, wenn das Applikationsmittel als Produkt käuflich erworben wurde und ein Schritt unternommen wurde, der üblicherweise nur nach Erwerb des Applikationsmittels unternommen werden darf. Dies gilt insbesondere dann, wenn die maschinenlesbare Kennung nur einmal verwendet werden kann, um beispielsweise eine applikationsmittelspezifische Applikationskarte zu erstellen und zu exportieren (Näheres zur einmaligen Verwendung einer Kennung ist weiter unten beschrieben).

Es ist zum Beispiel denkbar, dass sich die maschinenlesbare Kennung unter einer Siegelfolie befindet und der Nutzer die Siegelfolie erst entfernen oder öffnen muss, bevor er an die Kennung gelangt. Eine Entfernung und/oder ein Öffnen der Siegelfolie ist aber ein irreversibler Prozess, der sichtbare Spuren hinterlässt. Es ist beispielsweise denkbar, dass ein Entfernen der Siegelfolie und/oder ein Öffnen der Siegelfolie zum Kauf des Applikationsmittels verpflichtet. Ein potenzieller Käufer eines Applikationsmittels kann durch Prüfen der Siegelfolie erkennen, ob sich bereits jemand Zugang zur Kennung verschafft hat. Durch Verwenden einer Siegelfolie oder ähnlicher Mechanismen kann also sichergestellt werden, dass ein Applikationsmittel zunächst erworben werden muss, bevor der Erwerber die Kennung einlesen (und nutzen) kann.

In einem zweiten Schritt (Schritt (B) des erfindungsgemäßen Verfahrens) wird die maschinenlesbare Kennung durch einen Nutzer in ein Computersystem eingelesen. Schritt (B) erfolgt nach Schritt (A).

Liegt die maschinenlesbare Kennung in Form eines optoelektronisch lesbaren Codes vor (z.B. in Form eines Matrix-Codes), kann der Nutzer einen handelsüblichen Scanner oder eine Kameraeinheit verwenden, um den Code zu lesen. Er kann auch sein Smartphone verwenden, das wie oben beschrieben, als mobiles Computersystem aufgefasst werden kann, das mit Hilfe der zum Smartphone zugehörigen Kameraeinheit und entsprechend installierter Software den Code einlesen und interpretieren kann. Eine weitere Möglichkeit besteht in der Verwendung eines Tablet-Computers oder eines Notebooks. Auch die Verwendung einer Videobrille zum Einlesen eines optoelektronisch lesbaren Codes ist denkbar.

Gemäß Schritt (B) des erfindungsgemäßen Verfahrens wird eine maschinenlesbare Kennung in ein Computersystem eingelesen. Bei diesem Computersystem kann es sich um dasjenige Computersystem handeln, das in Schritt (E) des erfindungsgemäßen Verfahrens zum Erstellen einer Applikationskarte verwendet wird. Es kann sich aber auch um ein separates Computersystem handeln, das nur dazu verwendet wird, die Kennung einzulesen und ggf. die Datenbankabfrage gemäß Schritt (C) des erfindungsgemäßen Verfahrens vorzunehmen.

Entscheidend ist lediglich, dass die Informationen zum Applikationsmittel, die anhand der Kennung aus einer Datenbank empfangen werden (Schritt (C)), am Ende auf demjenigen Computersystem vorhanden sind, mit dem eine applikationsmittelspezifische Applikationskarte erstellt wird (Schritt (E)).

Da sich heutige Computersysteme auf verschiedene Weise vernetzen lassen und sich damit Informationen einfach von einem Computersystem zu einem anderem Computersystem übertragen lassen, ist es also ohne Belang, mit welchem Computersystem das Einlesen erfolgt, solange die zur Erstellung der applikationsmittelspezifischen Applikationskarte benötigten Informationen am Ende in demjenigen Computersystem vorliegen, mit dem diese Erstellung vorgenommen wird.

Der Schritt (C) des Einlesens dient dazu, dem jeweils verwendeten Computersystem mitzuteilen, welches Applikationsmittel vorliegt (z.B. erworben wurde).

Handelt es sich bei der maschinenlesbaren Kennung um eine typspezifische Kennung, verfügt das verwendete Computersystem nun über die Information, welcher Typ von Applikationsmittel vorliegt.

Handelt es sich wie im beanspruchten Gegenstand bei der maschinenlesbaren Kennung um eine individuelle Kennung, verfügt das verwendete Computersystem darüber hinaus über die Information, welches konkrete (individuelle) Behältnis mit Applikationsmittel vorliegt.

Für den nachfolgenden Schritt (Schritt (C) des erfindungsgemäßen Verfahrens) ist in einer Ausführungsform der vorliegenden Erfindung nur die Information zum vorliegenden Typ wichtig.

Auf Basis der Typ-Information empfängt das verwendete Computersystem Informationen zum Applikationsmitteltyp aus einer Datenbank. Dabei kann es sich um die folgenden Informationen handeln:
- Dosierinformationen,
- maximal verwendbare Konzentration des Applikationsmittels,
- minimal verwendbare Konzentration des Applikationsmittels,
- optimaler Konzentrationsbereich des Applikationsmittels,
- maximal verwendbare Menge an Applikationsmittel (Ausbringmenge pro Flächeneinheit),
- gesetzliche und/oder behördliche und/oder qualitätssichernde Anwendungseinschränkungen und/oder Anwendungsverbote für das Applikationsmittel z.B. in Bezug auf den Ort der Applikation oder die Zeit der Applikation,
- Wechselwirkungen des Applikationsmittels mit anderen Applikationsmitteln,
- Zeiten, in denen das Applikationsmittel nicht verwendet werden sollte oder darf,
- Zeiten, in denen das Applikationsmittel vorzugsweise verwendet werden sollte,
- Umweltbedingungen (Luftfeuchtigkeit, Temperatur, Sonneneinstrahlung etc.), die sich günstig auf die Wirkung des Applikationsmittels auswirken,
- Umweltbedingungen (Luftfeuchtigkeit, Temperatur, Sonneneinstrahlung etc.), die sich schädlich auf die Wirkung des Applikationsmittels auswirken,
- u.a.

Die Datenbank ist entweder Teil des Computersystems, das zum Einlesen der maschinenlesbaren Kennung verwendet wird und/oder auf dem die Erstellung der applikationsmittelspezifischen Applikationskarte erfolgt oder sie ist ein Teil eines weiteren Computersystems, mit dem das und/oder die genannten Computersysteme verbunden sind.

In einem weiteren Schritt (Schritt (D) des erfindungsgemäßen Verfahrens) wird der teilflächenspezifische Bedarf an Applikationsmittel für ein betrachtetes Feld, auf dem Kulturpflanzen angebaut werden, ermittelt.

Schritt (D) kann vor, während und/oder nach den Schritten (A), (B) und (C) erfolgen.

Bei dem Feld handelt es sich üblicherweise um das Feld des Nutzers, oder das Feld einer Person, für den der Nutzer tätig ist oder in dessen Auftrag der Nutzer sich um Belange des Felds kümmert.

Der Bedarf einer Teilfläche an einer Behandlung der Teilfläche (bzw. der dort angebauten Kulturpflanzen) mit einem (oder mehreren) Applikationsmittel(n) kann z.B. daher rühren, dass zu wenige Nährstoffe vorhanden sind und/oder ein Schädlingsbefall aufgetreten ist oder aufzutreten droht. Insofern könnte man anstelle eines "teilflächenspezifischen Bedarfs" auch von einem "teilflächenspezifischen Defizit an Nährstoffen" oder einem "teilflächenspezifischen Befall oder Befallsrisiko mit einem Schadorganismus" sprechen.

Die Ermittlung des teilflächenspezifischen Bedarfs erfolgt vorzugsweise durch Einsatz von Sensoren im und/oder über dem Feld.

Es ist zum Beispiel denkbar, dass der teilflächenspezifische Bedarf aus Fernerkundungsdaten ermittelt wird.

"Fernerkundungsdaten" sind digitale Informationen, die aus der Ferne beispielsweise durch Satelliten von der Erdoberfläche gewonnen wurden. Auch der Einsatz von Luftfahrzeugen (unbemannt (Drohnen) oder bemannt) zur Aufnahme von Fernerkundungsdaten ist denkbar.

Fernerkundungsdaten geben Auskunft über den Zustand der im Feld herrschenden Vegetation (siehe z.B. M. S. Moran et al.: Opportunities and Limitations for Image-Based Remote Sensing in Precision Crop Management, Remote Sensing of Environment (1997) 61: 319-346).

Aus den Fernerkundungsdaten lässt sich beispielsweise ein Vegetationsindex berechnen. Ein bekannter Vegetationsindex ist beispielsweise der normalisierte differenzierte Vegetationsindex (NDVI, engl. Normalized Differenced Vegetation Index oder auch Normalized Density Vegetation Index). Der NDVI wird aus den Reflexionswerten im nahen Infrarotbereich und des roten sichtbaren Bereichs des Lichtspektrums berechnet. Der Index beruht auf der Tatsache, dass gesunde Vegetation im roten Bereich des sichtbaren Spektralbereichs (Wellenlänge von etwa 600 bis 700 nm) relativ wenig und im angrenzenden Nahinfrarot-Bereich (Wellenlänge von etwa 700 bis 1300 nm) relativ viel Strahlung reflektiert. Dabei ist die Reflexion im Nahinfrarot auf das Vorhandensein von Chlorophyll zurückzuführen. Ein geringerer NDVI kann ein Anzeichen für eine Krankheit sein. Ebenso ist es denkbar, dass anhand eines erhöhten NDVI auf das Vorhandensein von Unkräutern und/oder Ungräsern geschlossen werden kann. In der Regel werden mehrere Informationen verwendet, um eine eindeutige Aussage über den teilflächenspezifischen Zustand eines Feldes bzw. einer Vegetation innerhalb des Feldes treffen und daraus einen teilflächenspezifischen Zustand ableiten zu können.

Als ein weiterer möglicher Vegetationsindex kann auch der gewichtete differenzierte Vegetationsindex (WDVI, engl. Weighted Difference Vegetation Index) aus den Fernerkundungsdaten ermittelt werden, der, wie in US2016/0171680A1 vorgeschlagen, mit dem Blattflächenindex (LAI, engl. Leaf Area Index) korreliert werden kann. Weitere Indizes, die verwendbar sind, sind dem Fachmann bekannt.

Anstelle von oder in Ergänzung zu Fernerkundungsdaten können auch Informationen mittels Sensoren im Feld gewonnen werden. Denkbar ist zum Beispiel der Einsatz eines so genannten N-Sensors, der ebenfalls einen NDVI ermitteln kann.

Denkbar ist auch der Einsatz von Sensoren zur Ermittlung eines Schädlingsbefalls. Auch der Einsatz von Fallen, die an verschiedenen Stellen des Felds aufgestellt sind, kann einen teilflächenspezifischen Befall erkennbar machen.

Es ist auch denkbar, für die Ermittlung eines teilflächenspezifischen Bedarfs Prognosemodelle zur Vorhersage von Schädlingsbefällen einzusetzen. Solche Prognosemodelle sind im Stand der Technik ausgiebig beschrieben und auch kommerziell verfügbar. Das Entscheidungsunterstützungssystem proPlant Expert (Newe et al. 2003, Johnen et al. 2010; www.proPlantexpert.com) verwendet zur Prognose Daten zur angebauten Kultur (Entwicklungsstadium, Wachstumsbedingungen, Pflanzenschutzmaßnahmen), zur Witterung (Temperatur, Sonnenscheindauer, Windgeschwindigkeit, Niederschlag) sowie zu den bekannten Schädlingen / Krankheiten (ökonomische Grenzwerte, Schädlings-/Krankheitsdruck). Mit Hilfe dieser Daten wird ein Befallsrisiko abgeschätzt und eine Empfehlung zu Behandlungszeitpunkt, Pflanzenschutzmittel sowie eine Bewertung vergangener Pflanzenschutzmaßnahmen erstellt.

Weitere Methoden zur Ermittlung eines teilflächenspezifischen Bedarfs eines Feldes mit Kulturpflanzen sind im Stand der Technik beschrieben (siehe z.B. WO2016/090212, US2016/0171680A1, US6199000, US2009/0132132A1, WO00/23937).

Das Ergebnis des Schritts (D) des erfindungsgemäßen Verfahrens ist üblicherweise eine Zonenkarte. Eine Zonenkarte ist eine digitale Repräsentation eines Feldes, auf dem Kulturpflanzen angebaut werden. In der Zonenkarte ist die digitale Repräsentation des Feldes in Teilflächen unterteilt. Für einzelne Teilflächen ist der Bedarf der Teilflächen (bzw. der dort angebauten Kulturpflanzen) an der Behandlung mit einem (oder mehreren) Applikationsmittel(n) angegeben. Vorzugsweise ist für jede Teilfläche (Zone) ein entsprechender Bedarf angegeben.

Die Segmentierung der virtuellen Repräsentation des Feldes in Teilflächen erfolgt so, dass Teilflächen mit einem ähnlichen Bedarf entstehen. Die Segmentierung erfolgt anhand eines oder mehrerer Parameter, die den Bedarf des Feldes (bzw. der in dem Feld angebauten Kulturpflanzen) repräsentieren. Bei der Segmentierung geht es vorzugsweise darum, die Unterschiede innerhalb einer Teilfläche in Bezug auf den vorhandenen Bedarf zu minimieren und die Unterschiede zwischen den Teilflächen zu maximieren. Die Segmentierung kann nach bekannten mathematischen Methoden wie beispielsweise dem Jenks-Caspall-Algorithmus oder anderen dem Fachmann bekannten Algorithmen erfolgen.

Es ist auch denkbar, dass die Informationen über den teilflächenspezifischen Bedarf eines Feldes an einem oder mehreren Applikationskarten bereits in Form einer "fertigen" Zonenkarte vorliegen. Es ist zum Beispiel denkbar, dass solche Zonenkarten von einem kommerziellen Anbieter erworben werden können. In einem solchen Fall ist der Schritt (D) des erfindungsgemäßen Verfahrens so zu verstehen, dass eine Zonenkarte bereitgestellt wird, wobei in der Zonenkarte für einzelne Teilflächen des Felds ein Bedarf der Teilflächen an der Behandlung mit einem Applikationsmittel angegeben ist. Eine solche Zonenkarte wird dann von einem Nutzer in dasjenige Computersystem (direkt oder indirekt) eingelesen, das in Schritt (E) des erfindungsgemäßen Verfahrens zur Erstellung der applikationsmittelspezifischen Applikationskarte verwendet wird.

In einem weiteren Schritt werden die in den Schritten (C) und (D) gesammelten Informationen zusammengeführt. Sie stehen dann in einem Computersystem zur Verfügung, mit dem eine applikationsmittelspezifische Applikationskarte erstellt wird (Schritt (E) des erfindungsgemäßen Verfahrens).

Schritt (E) erfolgt nach den Schritten (A), (B), (C) und (D).

Schritt (E) erfolgt unter Einsatz eines Computerprogramms, das in den Arbeitsspeicher des Computersystems gelesen und dort ausgeführt werden kann.

Mit Hilfe des Computerprogramms wird zunächst vorzugsweise durch Einlesen der in Schritt (D) erstellten Zonenkarte der teilflächenspezifische Bedarf festgestellt und dann ermittelt, welche Applikationsmitteltypen zur Befriedigung des Bedarfs in Frage kommen.

Wird beispielsweise ein Schädlingsbefall festgestellt, wird ermittelt, welche Pflanzenschutzmittel zur Schädlingsbekämpfung eingesetzt werden können. Dies erfolgt in der Regel durch Abfragen entsprechender Einträge in Applikationsmittel-Datenbanken.

Das Ergebnis der Abfrage ist eine Liste von Applikationsmittel-Typen (Produkten), die zur Befriedigung des ermittelten Bedarfs einsetzbar sind.

Anhand der maschinenlesbaren Kennung kann festgestellt werden, ob der Nutzer über eines der in der Liste nutzbarer Applikationsmittel aufgeführten Applikationsmitteln verfügt.

Anhand der ermittelten Informationen zum vorliegenden Applikationsmittel kann festgestellt werden, welche Bedingungen für die Applikation des Applikationsmittels gelten. Aus dem teilflächenspezifischen Bedarf und den Bedingungen zum Einsatz des verfügbaren Applikationsmittels lässt sich dann eine applikationsmittelspezifische Applikationskarte erstellen, in der für einzelne Teilflächen des Feldes angegeben ist, ob und wie das Applikationsmittel eingesetzt werden sollte.

Die Applikationskarte ist eine digitale Repräsentation des Feldes. In der Applikationskarte ist angegeben, auf welchen Teilflächen des Feldes, in welcher Dosis (Menge, Konzentration) ein oder mehrere Applikationsmittel eingesetzt werden sollen. Die Applikationskarte berücksichtigt sowohl den teilflächenspezifischen Bedarf als auch die Spezifika des einzusetzenden Applikationsmittels und ist daher sowohl teilflächenspezifisch als auch applikationsmittelspezifisch.

Erfindungsgemäß wird die Ermittlung von applikationsmittelspezifischen Informationen aus einer Datenbank an das vorherige Einlesen einer dem Applikationsmittel anhaftenden Kennung geknüpft. Prinzipiell wäre es denkbar, dass nach Ermittlung eines teilflächenspezifischen Bedarfs einem Nutzer eine Liste an nutzbaren Applikationsmitteln angezeigt wird, die zur Befriedigung des Bedarfs eingesetzt werden können. Er könnte dann ein Applikationsmittel aus der Liste auswählen und es könnten dann die applikationsmittelspezifischen Informationen zum ausgewählten Applikationsmittel aus einer Datenbank empfangen werden. Eine solche Vorgehensweise ist aber gegenüber dem erfindungsgemäßen Ansatz nachteilig. Es kann beispielsweise sein, dass eine Vielzahl an möglichen Applikationsmitteln angezeigt wird und er dann aus der Liste eines auswählt, das nicht mit dem übereinstimmt, das er im Lager hat. In einem solchen Fall würden also die falschen applikationsmittelspezifischen Informationen in die Erstellung der Applikationskarte einfließen.

Erfindungsgemäß werden solche Fehler umgangen, in dem der Nutzer keine Auswahl treffen muss sondern durch Einlesen der maschinenlesbaren Kennung automatisch die richtigen applikationsmittelspezifischen Informationen empfangen werden.

Ferner ist es denkbar, dass der kommerzielle Vertreiber eines erfindungsgemäßen Computerprogrammprodukts nicht der Vertreiber des Applikationsmittels ist. In solchen Fällen kann es zu Schwierigkeiten bei Haftungsfragen kommen. Wer wäre für einen Schaden aufgrund einer fehlerhaften Applikation verantwortlich? Der Vertreiber des Computerprogrammprodukts mit dem die Applikationskarte erstellt worden ist, oder der Vertreiber des Applikationsmittels, oder der Anbieter der Datenbank mit applikationsmittelspezifischen Informationen?

Um derartige Konflikte zu vermeiden, ist das Computerprogramm in einer Ausführungsform der vorliegenden Erfindung so konfiguriert, dass nur dann eine Applikationskarte erstellt wird, wenn der Nutzer im Vorfeld eine maschinenlesbare Kennung eingelesen hat.

Im beanspruchten Gegenstand wird die Erstellung einer Applikationskarte an das Vorliegen einer individuellen Kennung gebunden. Nur dann, wenn eine individuelle Kennung eingelesen worden ist, lässt sich eine Applikationskarte erstellen und exportieren.

Das Computerprogramm kann so konfiguriert sein, dass sich mit einer einzigen individuellen Kennung auch nur eine einzige Applikationskarte erstellen und/oder exportieren lässt. Nach dem Erstellen und/oder Exportieren einer Applikationskarte wäre die individuelle Kennung "verbraucht".

Neben den applikationsmittelspezifischen Informationen können weitere Informationen, die einen Einfluss auf die Wirksamkeit des Applikationsmittels oder den Applikationsvorgang ausüben, in die Erstellung der applikationsmittelspezifischen Applikationskarte einfließen. Es ist zum Beispiel denkbar, Wetterinformationen (Vorhersagen) zum Zeitpunkt einer geplanten Applikation zu nutzen. Wie bereits beschrieben, kann es sein, dass die Applikation an die jeweils herrschende Wetterlage angepasst werden sollte, um einen bestmöglichen Effekt zu erzielen. In einer Ausführungsform der vorliegenden Erfindung wird demnach die Wetterlage an einem geplanten Applikationstag ermittelt und die Menge und/oder die Konzentration und/oder die Formulierung des Applikationsmittels und/oder der Zeitpunkt der Applikation und/oder ein anderer Applikationsparameter an das herrschende Wetter angepasst.

Es ist auch denkbar, anhand der Wetterinformationen (Vorhersagen) einen optimalen Zeitpunkt für die Applikation des ausgewählten Applikationsmittels zu bestimmen.

Eine Applikationskarte, in die Informationen über das für den Applikationszeitraum erwartete (vorhergesagte) Wetter einfließen, wird hier auch als wetterspezifische Applikationskarte bezeichnet.

Fließen neben Informationen zum Applikationsmittel weitere Informationen, die einen Einfluss auf die Wirksamkeit des Applikationsmittels oder den Applikationsvorgang ausüben, in die Erstellung der Applikationskarte ein, wird die erstellte Applikationskarte hier auch als applikationsspezifische Applikationskarte bezeichnet. Eine wetterspezifische und applikationsmittelspezifische Applikationskarte ist ein Beispiel einer solchen applikationsspezifischen Applikationskarte.

Im beanspruchten Gegenstand werden die digitale Applikationskarte oder Teile davon in einen Arbeitsspeicher einer Applikationsvorrichtung geladen.

Unter einer Applikationsvorrichtung wird eine maschinelle Vorrichtung zum Applizieren eines Applikationsmittels auf einem Feld verstanden. Eine solche Applikationsvorrichtung umfasst in der Regel mindestens einen Behälter zur Aufnahme mindestens eines Applikationsmittels, eine Sprühvorrichtung, mit der das Applikationsmittel auf dem Feld abgegeben wird und eine Steuereinrichtung, mit der die Förderung des mindestens einen Applikationsmittels aus seinem Behälter in Richtung Sprühvorrichtung gesteuert wird. Die digitale Applikationskarte wird dementsprechend vorzugsweise in den Arbeitsspeicher der Steuereinheit geladen. Die Steuereinheit steht darüber hinaus vorzugsweise mit einem Positionsbestimmungssystem in Verbindung, das die Lage der Applikationsvorrichtung auf dem Feld ermittelt. Vorzugsweise setzt die Steuereinrichtung den Applikationsprozess dann in der entsprechenden Weise in Gang, wenn auf der digitalen Applikationskarte verzeichnet ist, dass an einem Ort eine Applikation erfolgen soll und wenn das Positionsbestimmungssystem meldet, dass sich die Applikationsvorrichtung gerade an diesem Ort befindet.

Es ist denkbar, dass ein Nutzer eine erstellte Applikationskarte auf einen mobilen Datenträger exportieren kann, mit dem die Applikationskarte zu einer Applikationseinrichtung transportiert und dort in die Steuereinheit eingelesen werden kann. Es ist aber auch denkbar, dass der Nutzer eine erstellte Applikationskarte drahtlos von dem Computersystem, auf dem sie erstellt worden ist, zur Steuereinheit der Applikationsvorrichtung übermitteln kann.

In dem erfindungsgemäßen Verfahren zum Anbau von Kulturpflanzen ist die Verwendung der erstellten Applikationskarte, d.h. das teilflächenspezifische Applizieren des Applikationsmittels gemäß der applikationsmittelspezifischen Applikationskarte ein weiterer Schritt (Schritt (F), der nach den Schritten (A) bis (E) vorgenommen wird.

### Literatur

Newe M., Meier H., Johnen A., Volk T. 2003. proPlant expert.com - an online consultation system on crop protection in cereals, rape, potatoes and sugarbeet. EPPO Bulletin 33, 443-449.

Johnen A., Williams I.H., Nilsson C., Klukowski Z., Luik A., Ulber B. 2010. The proPlant Decision Support System: Phenological Models for the Major Pests of Oilseed Rape and Their Key Parasitoids in Europe. In: Biocontrol-Based Integrated Management of Oilseed Rape Pests. Ed.: Ingrid H. Williams. Tartu 51014, Estonia. ISBN 978-90-481-3982-8. p. 381 - 403.

## Patentansprüche

1. Verfahren zur Erstellung einer Applikationskarte, umfassend die folgenden Schritte:
(A) Bereitstellen eines Applikationsmittels, das eine maschinenlesbare Kennung trägt,
(B) Einlesen der maschinenlesbaren Kennung in ein Computersystem durch einen Nutzer,
(C) Empfangen von Informationen über das Applikationsmittel aus einer Datenbank,
(D) Ermitteln eines teilflächenspezifischen Bedarfs an Applikationsmittel für ein Feld, auf dem Kulturpflanzen angebaut werden,
(E) Erstellen einer applikationsmittelspezifischen Applikationskarte für das Laden in einen Arbeitsspeicher einer Steuereinheit, mit der eine Förderung des Applikationsmittels aus seinem Behälter in Richtung einer Sprühvorrichtung gesteuert wird, auf Basis der Informationen über das Applikationsmittel aus der Datenbank und dem teilflächenspezifischen Bedarf, wobei anhand der Informationen über das Applikationsmittel festgestellt wird, welche Bedingungen für die Applikation des Applikationsmittels gelten und die applikationsmittelspezifische Applikationskarte aus dem teilflächenspezifischen Bedarf und den Bedingungen erstellt wird,
wobei zur Erstellung der Applikationskarte auch Wetterinformationen berücksichtigt werden und es sich bei den Informationen in Schritt (C) des erfindungsgemäßen Verfahrens um eine oder mehrere Informationen aus der folgenden Liste handelt:
- Dosierinformationen,
- maximal verwendbare Konzentration des Applikationsmittels,
- minimal verwendbare Konzentration des Applikationsmittels,
- maximal verwendbare Menge an Applikationsmittel,
- gesetzliche und/oder behördliche und/oder qualitätssichernde
- Anwendungseinschränkungen und/oder Anwendungsverbote für das Applikationsmittel in Bezug auf den Ort der Applikation oder die Zeit der Applikation und/oder
- Wechselwirkungen des Applikationsmittels mit anderen Applikationsmitteln,
wobei die Wetterlage an einem geplanten Applikationstag ermittelt wird und Menge und/oder Konzentration und/oder Formulierung des Applikationsmittels und/oder der Zeitpunkt der Applikation und/oder ein anderer Applikationsparameter an das herrschende Wetter angepasst wird/werden,
wobei es sich bei der maschinenlesbaren Kennung um eine individuelle Kennung handelt, die für einen Träger einzigartig ist,
wobei das Erstellen der Applikationskarte an das Vorliegen der individuellen Kennung gebunden ist und sich nur dann, wenn die individuelle Kennung eingelesen worden ist, die Applikationskarte erstellen und exportieren lässt, und
wobei sich mit der individuellen Kennung nur eine einzige Applikationskarte erstellen und exportieren lässt.

2. Verfahren zum Anbau von Kulturpflanzen in einem Feld, **gekennzeichnet durch** die folgenden Schritte:
(A) Bereitstellen eines Applikationsmittels, das eine maschinenlesbare Kennung trägt,
(B) Einlesen der maschinenlesbaren Kennung in ein Computersystem durch einen Nutzer,
(C) Empfangen von Informationen über das Applikationsmittel aus einer Datenbank,
(D) Ermitteln eines teilflächenspezifischen Bedarfs an Applikationsmittel für das Feld, auf dem die Kulturpflanzen angebaut werden,
(E) Erstellen einer applikationsmittelspezifischen Applikationskarte auf Basis der Informationen über das Applikationsmittel aus der Datenbank und dem teilflächenspezifischen Bedarf für das Feld, auf dem die Kulturpflanzen angebaut werden, wobei anhand der Informationen über das Applikationsmittel festgestellt wird, welche Bedingungen für die Applikation des Applikationsmittels gelten und die applikationsmittelspezifische Applikationskarte aus dem teilflächenspezifischen Bedarf und den Bedingungen erstellt wird,
(F) teilflächenspezifisches Applizieren des Applikationsmittels gemäß der applikationsmittelspezifischen Applikationskarte
wobei zur Erstellung der Applikationskarte auch Wetterinformationen berücksichtigt werden und es sich bei den Informationen in Schritt (C) des erfindungsgemäßen Verfahrens um mehrere Informationen aus der folgenden Liste handelt:
- Dosierinformationen,
- maximal verwendbare Konzentration des Applikationsmittels,
- minimal verwendbare Konzentration des Applikationsmittels,
- maximal verwendbare Menge an Applikationsmittel,
- gesetzliche und/oder behördliche und/oder qualitätssichernde
- Anwendungseinschränkungen und/oder Anwendungsverbote für das Applikationsmittel in Bezug auf den Ort der Applikation oder die Zeit der Applikation und/oder
- Wechselwirkungen des Applikationsmittels mit anderen Applikationsmitteln,
wobei die Applikationskarte oder Teile davon in einen Arbeitsspeicher einer Steuereinheit, mit der eine Förderung des Applikationsmittels aus seinem Behälter in Richtung einer Sprühvorrichtung gesteuert wird, geladen werden,
wobei die Wetterlage an einem geplanten Applikationstag ermittelt wird und Menge und/oder Konzentration und/oder Formulierung des Applikationsmittels und/oder der Zeitpunkt der Applikation und/oder ein anderer Applikationsparameter an das herrschende Wetter angepasst wird/werden,
wobei es sich bei der maschinenlesbaren Kennung um eine individuelle Kennung handelt, die für einen Träger einzigartig ist,
wobei das Erstellen der Applikationskarte an das Vorliegen der individuellen Kennung gebunden ist und sich nur dann, wenn die individuelle Kennung eingelesen worden ist, die Applikationskarte erstellen und exportieren lässt, und
wobei sich mit der individuellen Kennung nur eine einzige Applikationskarte erstellen und exportieren lässt.

3. Verfahren nach einem der Ansprüche 1 oder 2, wobei es sich bei dem Applikationsmittel um ein Pflanzenschutzmittel, vorzugsweise um ein Herbizid, Fungizid oder Pestizid handelt.

4. Verfahren nach einem der Ansprüche 1 bis 3, **dadurch gekennzeichnet, dass** die maschinenlesbare Kennung in Form eines optoelektronisch lesbaren Strichcodes, 2D-Codes oder Matrix-Codes vorliegt.

5. Verfahren nach einem der Ansprüche 1 bis 4 **dadurch gekennzeichnet, dass** der teilflächenspezifische Bedarf an Applikationsmittel für das Feld durch Einsatz von Sensoren im und/oder über dem Feld ermittelt wird.

6. Verfahren nach einem der Ansprüche 1 bis 5 **dadurch gekennzeichnet, dass** der teilflächenspezifische Bedarf an Applikationsmittel für das Feld aus Fernerkundungsdaten ermittelt wird.

7. System zur Erstellung applikationsmittelspezifischer Applikationskarten umfassend
I. ein Applikationsmittel, das eine maschinenlesbare Kennung trägt,
II. eine Leseeinheit zum Einlesen der maschinenlesbaren Kennung in ein Computersystem,
III. eine Datenbank, in der Informationen zum Applikationsmittel gespeichert sind,
IV. eine Zonenkarte für ein Feld, in dem Kulturpflanzen angebaut werden, wobei in der Zonenkarte für einzelne Teilflächen des Felds ein Bedarf der Teilflächen an der Behandlung mit einem Applikationsmittel angegeben ist,
V. ein Computersystem mit einem Arbeitsspeicher, in den ein Computerprogramm geladen werden kann, wobei das Computersystem so konfiguriert ist, dass es auf Basis der Zonenkarte und der Informationen zum Applikationsmittel eine applikationsmittelspezifische Applikationskarte erstellt, in der für einzelne Teilflächen angegeben ist, wie das Applikationsmittel appliziert werden sollte, wobei anhand der Informationen zu dem Applikationsmittel festgestellt wird, welche Bedingungen für die Applikation des Applikationsmittels gelten und die applikationsmittelspezifische Applikationskarte aus dem teilflächenspezifischen Bedarf und den Bedingungen erstellt wird,
wobei zur Erstellung der Applikationskarte auch Wetterinformationen berücksichtigt werden und es sich bei den Informationen zu dem Applikationsmittel um eine oder mehrere Informationen aus der folgenden Liste handelt:
- Dosierinformationen,
- maximal verwendbare Konzentration des Applikationsmittels,
- minimal verwendbare Konzentration des Applikationsmittels,
- maximal verwendbare Menge an Applikationsmittel,
- gesetzliche und/oder behördliche und/oder qualitätssichernde
- Anwendungseinschränkungen und/oder Anwendungsverbote für das Applikationsmittel in Bezug auf den Ort der Applikation oder die Zeit der Applikation und/oder
- Wechselwirkungen des Applikationsmittels mit anderen Applikationsmitteln,
wobei die Applikationskarte oder Teile davon in einen Arbeitsspeicher einer Steuereinheit, mit der eine Förderung des Applikationsmittels aus seinem Behälter in Richtung einer Sprühvorrichtung gesteuert wird, geladen werden,
wobei die Wetterlage an einem geplanten Applikationstag ermittelt wird und Menge und/oder Konzentration und/oder Formulierung des Applikationsmittels und/oder der Zeitpunkt der Applikation und/oder ein anderer Applikationsparameter an das herrschende Wetter angepasst wird/werden,
wobei es sich bei der maschinenlesbaren Kennung um eine individuelle Kennung handelt, die für einen Träger einzigartig ist,
wobei das Erstellen der Applikationskarte an das Vorliegen der individuellen Kennung gebunden ist und sich nur dann, wenn die individuelle Kennung eingelesen worden ist, die Applikationskarte erstellen und/oder exportieren lässt, und
wobei sich mit der individuellen Kennung nur eine einzige Applikationskarte erstellen und exportieren lässt.

## Claims

1. Method for preparing an application map, comprising the following steps:
(A) providing an application agent carrying a machine-readable identifier,
(B) reading of the machine-readable identifier into a computer system by a user,
(C) receiving information on the application agent from a database,
(D) determining a partial-area-specific need for application agent for a field on which crop plants are cultivated,
(E) preparing an application-agent-specific application map for loading into a working memory of a control unit used to control feeding of the application agent from its container in the direction of a spraying device, based on the information on the application agent from the database and the partial-area-specific need, wherein the information on the application agent is used to determine which conditions apply for the application of the application agent and the application-agent-specific application map is prepared from the partial-area-specific need and the conditions,
wherein weather information is also taken into consideration for preparing the application map and the information in step (C) of the method according to the invention is one or more types of information from the following list:
- dosing information,
- maximum usable concentration of the application agent,
- minimum usable concentration of the application agent,
- maximum usable amount of application agent,
- legal and/or official and/or quality assurance limitations on use and/or prohibitions of use for the application agent with respect to the location of the application or the time of the application and/or
- interactions of the application agent with other application agents,
wherein the weather situation on a planned application day is determined and amount and/or concentration and/or formulation of the application agent and/or the time of the application and/or another application parameter is/are adapted to the prevailing weather,
wherein the machine-readable identifier is an individual identifier that is unique to a carrier,
wherein the preparation of the application map is linked to the presence of the individual identifier and only after the individual identifier has been read in is it possible to prepare and export the application map, and wherein with the individual identifier it is only possible to prepare and export a single application map.

2. Method for cultivating crop plants in a field, **characterized by** the following steps:
(A) providing an application agent carrying a machine-readable identifier,
(B) reading of the machine-readable identifier into a computer system by a user,
(C) receiving information on the application agent from a database,
(D) determining a partial-area-specific need for application agent for the field on which the crop plants are cultivated,
(E) preparing an application-agent-specific application map based on the information on the application agent from the database and the partial-area-specific need for the field on which the crop plants are cultivated, wherein the information on the application agent is used to determine which conditions apply for the application of the application agent and the application-agent-specific application map is prepared from the partial-area-specific need and the conditions,
(F) partial-area-specific application of the application agent according to the application-agent-specific application map,
wherein weather information is also taken into consideration for preparing the application map and the information in step (C) of the method according to the invention is multiple types of information from the following list:
- dosing information,
- maximum usable concentration of the application agent,
- minimum usable concentration of the application agent,
- maximum usable amount of application agent,
- legal and/or official and/or quality assurance limitations on use and/or prohibitions of use for the application agent with respect to the location of the application or the time of the application and/or
- interactions of the application agent with other application agents,
wherein the application map or parts thereof are loaded into a working memory of a control unit used to control feeding of the application agent from its container in the direction of a spraying device,
wherein the weather situation on a planned application day is determined and amount and/or concentration and/or formulation of the application agent and/or the time of the application and/or another application parameter is/are adapted to the prevailing weather,
wherein the machine-readable identifier is an individual identifier that is unique to a carrier,
wherein the preparation of the application map is linked to the presence of the individual identifier and only after the individual identifier has been read in is it possible to prepare and export the application map, and wherein with the individual identifier it is only possible to prepare and export a single application map.

3. Method according to either of Claims 1 and 2, wherein the application agent is a plant protection agent, preferably a herbicide, fungicide or pesticide.

4. Method according to any of Claims 1 to 3, **characterized in that** the machine-readable identifier is in the form of an optoelectronically readable barcode, 2D code or matrix code.

5. Method according to any of Claims 1 to 4, **characterized in that** the partial-area-specific need for application agent for the field is determined using sensors in and/or over the field.

6. Method according to any of Claims 1 to 5, **characterized in that** the partial-area-specific need for application agent for the field is determined from remote sensing data.

7. System for preparing application-agent-specific application maps comprising
I. an application agent carrying a machine-readable identifier,
II. a reading unit for reading the machine-readable identifier into a computer system,
III. a database in which information on the application agent is stored,
IV. a zone map for a field in which crop plants are cultivated, wherein for individual partial areas of the field a need of the partial areas for treatment with an application agent is indicated in the zone map,
V. a computer system with a working memory into which a computer program can be loaded, wherein the computer system is configured such that, based on the zone map and the information on the application agent, it prepares an application-agent-specific application map that indicates for individual partial areas how the application agent is to be applied, wherein the information on the application agent is used to determine which conditions apply for the application of the application agent and the application-agent-specific application map is prepared from the partial-area-specific need and the conditions,
wherein weather information is also taken into consideration for preparing the application map and the information on the application agent is one or more types of information from the following list:
- dosing information,
- maximum usable concentration of the application agent,
- minimum usable concentration of the application agent,
- maximum usable amount of application agent,
- legal and/or official and/or quality assurance limitations on use and/or prohibitions of use for the application agent with respect to the location of the application or the time of the application and/or
- interactions of the application agent with other application agents,
wherein the application map or parts thereof are loaded into a working memory of a control unit used to control feeding of the application agent from its container in the direction of a spraying device,
wherein the weather situation on a planned application day is determined and amount and/or concentration and/or formulation of the application agent and/or the time of the application and/or another application parameter is/are adapted to the prevailing weather,
wherein the machine-readable identifier is an individual identifier that is unique to a carrier,
wherein the preparation of the application map is linked to the presence of the individual identifier and only after the individual identifier has been read in is it possible to prepare and/or export the application map, and
wherein with the individual identifier it is only possible to prepare and export a single application map.

## Revendications

1. Procédé pour la création d'une carte d'application, comprenant les étapes suivantes :
(A) fourniture d'un agent d'application qui porte un identifiant lisible par machine,
(B) lecture de l'identifiant lisible par machine dans un système informatique par un utilisateur,
(C) réception d'informations sur l'agent d'application provenant d'une base de données,
(D) détermination d'un besoin d'agent d'application spécifique à une surface partielle pour un champ sur lequel des plantes de culture sont cultivées,
(E) création d'une carte d'application spécifique à un agent d'application destinée au chargement dans une mémoire de travail d'une unité de commande au moyen de laquelle un transport de l'agent d'application à partir de son réservoir en direction d'un dispositif de pulvérisation est commandé, sur la base des informations sur l'agent d'application provenant de la base de données et du besoin spécifique à une surface partielle, dans lequel les informations sur l'agent d'application permettent d'établir les conditions en vigueur pour l'application de l'agent d'application, et la carte d'application spécifique à l'agent d'application est créée à partir du besoin spécifique à une surface partielle et des conditions,
dans lequel, pour la création de la carte d'application, des informations météorologiques sont également prises en considération, et les informations à l'étape (C) du procédé selon l'invention sont une ou plusieurs informations de la liste suivante :
- des informations de dosage,
- une concentration maximale utilisable de l'agent d'application,
- une concentration minimale utilisable de l'agent d'application,
- une quantité maximale utilisable de l'agent d'application,
- des limitations de mise en oeuvre légales et/ou réglementaires et/ou d'assurance qualité et/ou des interdictions de mise en oeuvre pour l'agent d'application par rapport au lieu de l'application ou au temps de l'application et/ou
- des interactions de l'agent d'application avec d'autres agents d'application,
dans lequel les conditions météorologiques sont déterminées un jour d'application planifié, et la quantité et/ou la concentration et/ou la formulation de l'agent d'application et/ou le moment de l'application et/ou un autre paramètre d'application sont adaptés au temps qu'il fait,
dans lequel l'identifiant lisible par machine est un identifiant individuel qui est unique à un support,
dans lequel la création de la carte d'application est liée à la présence de l'identifiant individuel et la carte d'application ne peut être créée et exportée que lorsque l'identifiant individuel a été lu, et
dans lequel l'identifiant individuel ne permet de créer et d'exporter qu'une seule carte d'application.

2. Procédé pour la culture de plantes de culture dans un champ, **caractérisé par** les étapes suivantes :
(A) fourniture d'un agent d'application, qui porte un identifiant lisible par machine,
(B) lecture de l'identifiant lisible par machine dans un système informatique par un utilisateur,
(C) réception d'informations sur l'agent d'application provenant d'une base de données,
(D) détermination d'un besoin d'agent d'application spécifique à une surface partielle pour le champ sur lequel les plantes de culture sont cultivées,
(E) création d'une carte d'application spécifique à un agent d'application sur la base des informations sur l'agent d'application provenant de la base de données et du besoin spécifique à une surface partielle pour le champ sur lequel les plantes de culture sont cultivés, dans lequel les informations sur l'agent d'application permettent d'établir les conditions en vigueur pour l'application de l'agent d'application, et la carte d'application spécifique à l'agent d'application est créée à partir du besoin spécifique à la surface partielle et des conditions,
(F) application spécifique à la surface partielle de l'agent d'application selon la carte d'application spécifique à l'agent d'application,
dans lequel, pour la création de la carte d'application, des informations météorologiques sont également prises en considération, et les informations à l'étape (C) du procédé selon l'invention sont plusieurs informations de la liste suivante :
- des informations de dosage
- la concentration maximale utilisable de l'agent d'application,
- la concentration minimale utilisable de l'agent d'application,
- la quantité maximale utilisable de l'agent d'application,
- des limitations de mise en oeuvre légales et/ou réglementaires et/ou d'assurance qualité et/ou des interdictions de mise en oeuvre pour l'agent d'application par rapport au lieu de l'application ou au temps de l'application et/ou
- des interactions de l'agent d'application avec d'autres agents d'application,
dans lequel la carte d'application ou des parties de celle-ci sont chargées dans une mémoire de travail d'une unité de commande qui commande un transport de l'agent d'application à partir de son réservoir en direction du dispositif de pulvérisation,
dans lequel les conditions météorologiques sont déterminées un jour d'application planifié, et la quantité et/ou la concentration et/ou la formulation de l'agent d'application et/ou le moment de l'application et/ou un autre paramètre d'application sont adaptés au temps qu'il fait,
dans lequel l'identifiant lisible par machine est un identifiant individuel qui est unique à un support,
dans lequel la création de la carte d'application est liée à la présence de l'identifiant individuel et la carte d'application ne peut être créée et exportée que lorsque l'identifiant individuel a été lu et
dans lequel l'identifiant individuel ne permet de créer et d'exporter qu'une seule carte d'application.

3. Procédé selon l'une quelconque des revendications 1 ou 2, l'agent d'application étant un agent de phytoprotection, de préférence un herbicide, un fongicide ou un pesticide.

4. Procédé selon l'une quelconque des revendications 1 à 3, **caractérisé en ce que** l'identifiant lisible par machine se trouve sous forme d'un code-barres, d'un code 2D ou d'un code matriciel lisible de manière optoélectronique.

5. Procédé selon l'une quelconque des revendications 1 à 4, **caractérisé en ce que** le besoin d'agent d'application spécifique à une surface partielle pour le champ est déterminé par l'utilisation de capteurs dans le et/ou au-dessus du champ.

6. Procédé selon l'une quelconque des revendications 1 à 5, **caractérisé en ce que** le besoin d'agent d'application spécifique à une surface partielle pour le champ est déterminé à partir de données de détection à distance.

7. Système pour la création de cartes d'application spécifiques à un agent d'application, comprenant
I. un agent d'application qui porte un identifiant lisible par machine,
II. une unité de lecture pour la lecture de l'identifiant lisible par machine dans un système informatique,
III. une base de données dans laquelle des informations sur l'agent d'application sont enregistrées,
IV. une carte de zones pour un champ sur lequel des plantes de culture sont cultivées, dans lequel un besoin des surfaces partielles de traitement par un agent d'application est indiqué sur la carte de zones pour des surfaces partielles individuelles du champ,
V. un système informatique pourvu d'une mémoire de travail dans laquelle un programme informatique peut être chargé, dans lequel le système informatique est configuré de façon à créer sur la base de la carte de zones et des informations sur l'agent d'application une carte d'application spécifique à un agent d'application qui indique pour les surfaces partielles individuelles comment l'agent d'application devrait être appliqué, dans lequel les informations sur l'agent d'application permettent d'établir les conditions en vigueur pour l'application de l'agent d'application, et la carte d'application spécifique à un agent d'application est créée à partir du besoin spécifique à une surface partielle et des conditions,
dans lequel, pour la création de la carte d'application, des informations météorologiques sont également prises en considération, et les informations sur l'agent d'application sont une ou plusieurs informations de la liste suivante :
- des informations de dosage,
- la concentration maximale utilisable de l'agent d'application,
- la concentration minimale utilisable de l'agent d'application,
- la quantité maximale utilisable de l'agent d'application,
- des limitations de mise en oeuvre légales et/ou réglementaires et/ou d'assurance qualité et/ou des interdictions de mise en oeuvre pour l'agent d'application par rapport au lieu de l'application ou au temps de l'application, et/ou
- des interactions de l'agent d'application avec d'autres agents d'application,
dans lequel la carte d'application ou des parties de celle-ci sont chargées dans une mémoire de travail d'une unité de commande qui commande un transport de l'agent d'application à partir de son réservoir en direction d'un dispositif de pulvérisation,
dans lequel les conditions météorologiques sont déterminées un jour d'application planifié, et la quantité et/ou la concentration et/ou la formulation de l'agent d'application et/ou le moment de l'application et/ou un autre paramètre d'application sont adaptés au temps qu'il fait,
dans lequel l'identifiant lisible par machine est un identifiant individuel, qui est unique à un support,
dans lequel la création de la carte d'application est liée à la présence de l'identifiant individuel, et la carte d'application ne peut être créée et exportée que lorsque l'identifiant individuel a été lu, et
dans lequel l'identifiant individuel ne permet de créer et d'exporter qu'une seule carte d'application.
